# EUROPEAN PATENT SPECIFICATION

(11) **EP 2 849 411 B1**
(45) Date of publication and mention of the grant of the patent: **08.11.2017**
(21) Application number: 13840739.0
(22) Date of filing: 24.09.2013
(51) Int. Cl.: H04L 29/08, H04L 29/06, H04L 12/18

(54) **SESSION ESTABLISHMENT METHODS AND CORRESPONDING SERVER**
SITZUNGSEINRICHTUNGSVERFAHREN UND SERVER
PROCÉDÉS ET SERVEUR POUR L'ÉTABLISSEMENT D'UNE SESSION

(30) Priority: 25.09.2012 CN 201210362545
(43) Date of publication of application: 18.03.2015
(73) Proprietor: Xiaomi Inc., Beijing 100085 (CN)
(72) Inventor: FENG, Zhiyong, Beijing 100085 (CN); LI, Hui, Beijing 100085 (CN); SHI, Xin, Beijing 100085 (CN); DENG, Chaofeng, Beijing 100085 (CN)
(74) Representative: Hanna Moore + Curley
(86) International application number: PCT/CN2013/084116
(87) International publication number: WO 2014/048305

(56) References cited:
- WO-A1-2009/071388
- WO-A1-2012/035149
- CN-A- 101 645 933
- CN-A- 102 904 936
- CN-B- 101 309 514
- US-A1- 2006 282 538
- TopWebsites: "Random Stranger Chats!!", , 25 October 2009 (2009-10-25), XP054975822, Retrieved from the Internet: URL:https://www.youtube.com/watch?v=pICrET cac-Q [retrieved on 2015-04-17]
- Anonymous: "Omegle: Talk to strangers!", , 15 September 2012 (2012-09-15), XP055183529, Retrieved from the Internet: URL:http://web.archive.org/web/20120915064 403/http://www.omegle.com/ [retrieved on 2015-04-16]
- Anonymous: "Chat with random strangers - StrangerMeetup.com.", , 14 June 2012 (2012-06-14), XP055183533, Retrieved from the Internet: URL:http://web.archive.org/web/20120614062 420/http://strangermeetup.com/ [retrieved on 2015-04-16]

## Description

### TECHNICAL FIELD

The present disclosure generally relates to the field of communication, and more particularly, to a method, a server, a device, a system and an apparatus for establishing a session.

### BACKGROUND

With the popularization of the Internet, a variety of communication tools become popular. IM (Instant Messenger) is convenient, and IM may be performed on various kinds of terminals such as computers, cellphones, almost everyone has an IM account.

Under existing conditions, the communication tools may provide users with convenient session services which may include text sessions, voice sessions, or video sessions and the like. Generally, requirement of the sessions is that firstly the users need to create their own accounts on the Internet and input their own personal information such as age, gender etc., and share the information on the Internet; secondly, two people may choose to interact their accounts or add accounts thereof each other to establish their friend relationship, that is, the two people provide authority to each other to establish a session and a server may establish the session and provide the session services for the users who have friend relationship.

With the rapid development of the Internet, people's social network and the Internet trend to blend each other, some of the conventional communication tools may also provide functions of randomly matching two users who do not know each other and establishing a temporary session, the temporary session established through the server does not require the two users to be in friend relationship.

However, when the temporary session is established between the users, personal information of the users such as avatar, gender is exposed to each other when the temporary session is established, such that the personal information of the users is revealed without the user's permission, therefore the security of the personal information of the users is poor.

The relevant state of the art is represented by WO 2009/071388 A1 which discusses an anonymous session setup procedure, and Top Websites: "Random Stranger Chats!!", 25 October 2009, XP054975822, dedicated to enabling an anonymous chat session between users.

### SUMMARY

The present invention provides methods according to independent method claims 1 and 6, and a server according to independent claim 12, which may avoid revealing user personal information without permission and also can meet user's session requirements when setting up a session between two users. Additional aspects of the invention are set out in the dependent claims.

In an aspect, the present disclosure provides a method for establishing a session, including: receiving a session request sent from a first user via a terminal; performing matching to obtain a session target, a second user, to the first user; and sending an identifier of the second user to the terminal so that the terminal establishes a session between the first user and the second user. The identifier is used for the terminal to distinguish the session target of the first user, and the identifier is invisible to the first user.

In another aspect, the present disclosure provides a method for establishing a session, including: sending a session request of a first user to a server; receiving an identifier of a second user sent from the server; and establishing a session between the first user and the second user according to the identifier of the second user and hiding the identifier of the second user. The second user is a session target obtained by the server though performing matching on first user, and the identifier is used to distinguish the session target of the first user.

In still another aspect, the present disclosure provides a server for establishing a session, including: a first receiving module configured to receive a session request sent by a first user via a terminal; a matching module configured to perform matching to obtain a session target, a second user, to the first user; and a first sending module configured to send an identifier of the second user to the terminal so that the terminal establishes a session between the first user and the second user. The identifier is used for the terminal to distinguish the session target of the first user, and the identifier is invisible to the first user.

In still another aspect, the present disclosure provides a device for establishing a session, including: a first sending module configured to send a session request of a first user to a server; a first receiving module configured to receive an identifier of a second user sent by the server; and an establishment module configured to establish a session between the first user and the second user according to the identifier of the second user and hide the identifier of the second user. The second user is a session target obtained by the server though performing matching on first user, and the identifier is used to distinguish the session target of the first user.

In still another aspect, the present disclosure provides a system for establishing a session including any server as described above and any device as described above.

In still another aspect, the present disclosure provides an apparatus, including: one or more processors, a memory, and one or more programs stored in the memory and configured to be executed by the one or more processors. The one or more programs have the following functions: receiving a session request sent from a first user via a terminal; performing matching to obtain a session target, a second user, to the first user; and sending an identifier of the second user to the terminal so that the terminal establishes a session between the first user and the second user. The identifier is used for the terminal to distinguish the session target of the first user, and the identifier is invisible to the first user.

In still another aspect, the present disclosure provides an apparatus including: one or more processors, a memory, and one or more programs stored in the memory and configured to be executed by the one or more processors. The one or more programs have the following functions: sending a session request of a first user to a server; receiving an identifier of a second user sent from the server; and establishing a session between the first user and the second user according to the identifier of the second user and hiding the identifier of the second user. The second user is a session target obtained by the server though performing matching on first user, and the identifier is used to distinguish the session target of the first user.

It is to be understood that both the foregoing general description and the following detailed description are exemplary only and are not restrictive of the present disclosure.

Embodiments of the present disclosure may include the following advantageous effects.

The embodiments of the present disclosure provide a method, a server, a device and an apparatus for establishing a session, after a first user sends a session request, a session target is matched to the first user, and only an identifier of the session target, a second user, of the first user is returned back to a terminal so as to establish a session, such that the terminal distinguishes conversations through the identifier, thus no personal information of the users is output without the users' permission, meanwhile the task of establishing a temporary session for the users is accomplished without revealing the personal information of the users, and the security of the personal information of the users is enhanced.

### BRIEF DESCRIPTION OF THE DRAWINGS

In order to more clearly explain technical solutions of the embodiments of the present disclosure, hereinafter, the introduction to the drawings required to be used in the depiction of the prior art or the embodiments will be given simply. It is apparent that the following drawings only illustrate some of the embodiments of the present disclosure, and the person skilled in the art could obtain other drawings based on these drawings.
Fig. 1 is an exemplary flow chart showing a method for establishing a session provided by an embodiment of the present disclosure.
Fig. 2 is an exemplary flow chart showing another method for establishing a session provided by an embodiment of the present disclosure.
Fig. 3 is an exemplary flow chart showing still another method for establishing a session provided by an embodiment of the present disclosure.
Fig. 4 is an exemplary flow chart showing a process for matching a real-time session target to a first user by a server in a method for establishing a session provided by an embodiment of the present disclosure.
Fig. 5 is a diagram illustrating a completely established session interface provided by an embodiment of the present disclosure.
Fig. 6 is a block diagram illustrating a server for establishing a session provided by an embodiment of the present disclosure.
Fig. 7 is a block diagram illustrating a server for establishing a session provided by an embodiment of the present disclosure.
Fig. 8 is a block diagram illustrating a server for establishing a session provided by an embodiment of the present disclosure.
Fig. 9 is a block diagram illustrating a server for establishing a session provided by an embodiment of the present disclosure.
Fig. 10 is a block diagram illustrating a server for establishing a session provided by an embodiment of the present disclosure.
Fig. 11 is a block diagram illustrating a first receiving module in a server for establishing a session provided by an embodiment of the present disclosure.
Fig. 12 is a block diagram illustrating a matching module in a server for establishing a session provided by an embodiment of the present disclosure.
Fig. 13 is a block diagram illustrating a server for establishing a session provided by an embodiment of the present disclosure.
Fig. 14 is a block diagram illustrating a server for establishing a session provided by an embodiment of the present disclosure.
Fig. 15 is a block diagram illustrating a server for establishing a session provided by an embodiment of the present disclosure.
Fig. 16 is a block diagram illustrating a device for establishing a session provided by an embodiment of the present disclosure.
Fig. 17 is a block diagram illustrating a device for establishing a session provided by an embodiment of the present disclosure.
Fig. 18 is a block diagram illustrating a device for establishing a session provided by an embodiment of the present disclosure.
Fig. 19 is a block diagram illustrating a device for establishing a session provided by an embodiment of the present disclosure.
Fig. 20 is a block diagram illustrating a device for establishing a session provided by an embodiment of the present disclosure.
Fig. 21 is a block diagram illustrating a device for establishing a session provided by an embodiment of the present disclosure.
Fig. 22 is a block diagram illustrating a device for establishing a session provided by an embodiment of the present disclosure.
Fig. 23 is a block diagram illustrating a device for establishing a session provided by an embodiment of the present disclosure.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art with reference to particular embodiments.

### DETAILED DESCRIPTION

Detailed embodiments of a method, a server, a device and an apparatus for establishing a session provided by the embodiments of the present disclosure are described in detail hereinafter with reference to the accompanying drawings.

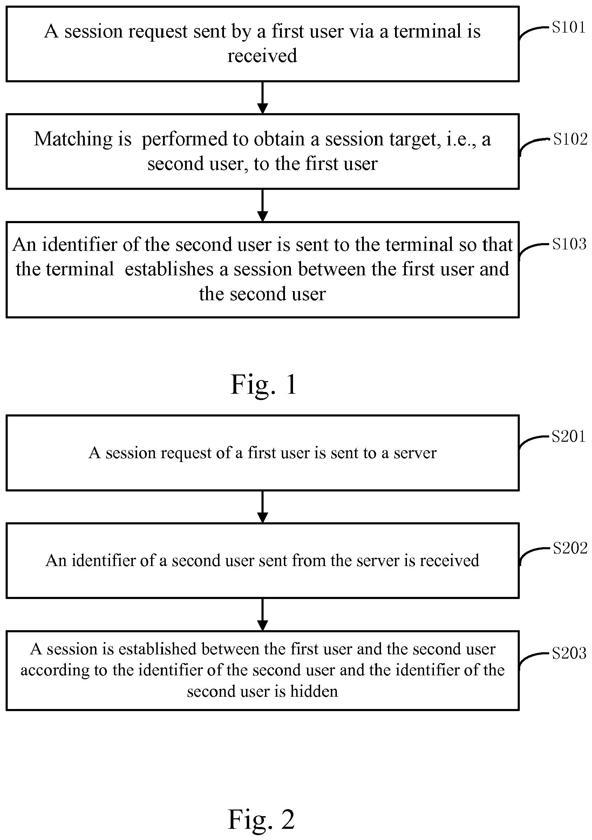

As shown in Fig. 1, an embodiment of the present disclosure provides a method for establishing a session, which improves a server for establishing a session, and a server end is described as an example. The method includes the following steps.

In step S101, a session request, which is sent from a first user via a terminal, is received.

In step S102, matching is performed for the first user to obtain a session target of the first user, i.e., a second user.

In step S103, an identifier of the second user is sent to the terminal so that the terminal establishes a session between the first user and the second user.

The identifier is used for the terminal to distinguish the session target of the first user, and is invisible to the first user.

Optionally, the identifier is invisible to the first user, that is, the terminal hides the identifier of the second user from the first user.

Optionally, after the server successfully matches the first user and the second user and a temporary session may be carried out, the server sends the identifier of the second user to the terminal in order to facilitate the terminal to establish the session between the first user and the second user. During the establishment of the session, the identifier is only used for the terminal to distinguish which session target the session comes from without outputting the identifier of the second user, so as to achieve the effect of hiding the identifier of the second user.

Optionally, after the step S103, the method may further include: sending a session message, which carries the identifier of the second user and session content of the second user, to the terminal.

Optionally, after the step S103, the method may further include: receiving session content, which is input by the first user in the session between the first user and the second user and the identifier of the second user sent from the terminal, and sending a session message, which carries an identifier of the first user, the identifier of the second user and the session content of the first user, to the second user.

Optionally, after the step S103, the method may further include: sending user information of the second user to the terminal; or, processing the user information of the second user, such that the processed user information of the second user does not reveal personal information of the second user, and sending the processed user information of the second user to the terminal.

The receiving the session request sent from the first user via the terminal may be performed in the following manner: the session request sent from the first user via a terminal is received, and a timing at which the session request of the first user is received is recorded as a first timing.

Optionally, the performing matching for the first user to obtain the session target, i.e., the second user, may be performed in the following manner: determining whether a real-time session target matching to the first user exists according to the first timing; using the real-time session target matching to the first user as the second user, if the real-time session target matching to the first user exists; and searching for a user who sends a session request at a timing closest to and prior to the first timing as the second user, if the real-time session target matching to the first user does not exist. The real-time session target matching to the first user is a user who sends a session request within a first duration range prior to or after the first timing.

Optionally, the determining whether the real-time session target matching to the first user exists may be performed in the following manner.

Step A, it is determined whether the session target matching to the first user is recorded in a locally stored register table, if the session target matching to the first user is recorded in the locally stored register table, the process proceeds to step B; if the session target matching to the first user is not recorded in the locally stored register table, the process proceeds to step C.

Step B, the session target matching to the first user recorded in the locally stored register table is used as the real-time session target matching to the first user, and the process ends.

Step C, the session target matching to the first user is selected from a local candidate queue according to a first preset rule, the process proceeds to step D if the selection is successful; and the process proceeds to step E if the selection is failed.

Step D, the session target, which is matched to first user and selected from the local candidate queue according to the first rule, is used as the real-time session target matching to the first user, and the first user and the real-time session target matching to the first user are recorded in the register table, and the process ends.

Step E, the first user is added to the candidate queue, and the process returns to the step A, and it is determined that the real-time session target matching to first user does not exist if the real-time session target matching to the first user is not successfully matched when reaching the first duration, and the process ends.

The first rule may be any one or any combination of the following rules: a rule in which a user who has different gender from the first user is selected from the candidate queue with a first preset probability to be used as the real-time session target matching to the first user; and a rule in which a user who is in the same city as the first user is selected from the candidate queue with a second preset probability to be used as the real-time session target matching to the first user.

Optionally, the searching for the user who sends the session request at the timing closest to and prior to the first timing as the second user may be performed in the following manner: searching for the user who sends the session request prior to the first timing in a forwarding order in accordance with the timing at which the session request is sent; using the user who meets the second present rule as the second user if the user who meets the second preset rule is found.

The second rule may be any one or any combination of the following rules: a rule in which a user who has different gender from the first user is selected from the candidate queue with a third preset probability to be used as the second user; and a rule in which a user who is in the same city as the first user is selected from the candidate queue with a fourth preset probability to be used as the second user.

Optionally, after the step S103, the method may further include: receiving a request sent from the first user for obtaining the user information of the second user when the session between the first user and the second user reaches a first preset condition; and sending the request of the first user for obtaining the user information to the second user.

Optionally, after the step S103, the method may further include: sending the user information of the second user to the terminal.

The first condition may be that in the session between the first user and the second user, the number of conversations reaches a preset number.

Optionally, after the step S103, the method may further include: sending opening remarks of the second user to the terminal. The opening remarks of the second user are words, photos, audio files or video files locally pre-stored by the second user.

The embodiment of the present disclosure provides a method for establishing a session, in which after a first user sends a session request, a session target is matched to the first user, and only an identifier of the session target (i.e., a second user) of the first user is returned back to a terminal so as to establish a session, such that the terminal may distinguish conversations through the identifier, and thus personal information of the users cannot be output without the users' permission. Therefore, the task of establishing a temporary session for the users is accomplished without revealing the personal information of the users, and the security of the personal information of the users is enhanced.

As shown in Fig. 2, an embodiment of the present disclosure provides a method for establishing a session, which improves a terminal for establishing a session, and the terminal is described as an example. The method includes the following steps.

In step S201, a session request of a first user is sent to a server.

In step S202, an identifier of a second user sent from the server is received.

In step S203, a session is established between the first user and the second user according to the identifier of the second user and the identifier of the second user is hidden.

The second user is a session target which is obtained by the server through performing matching for the first user, and the identifier is used to distinguish the session target of the first user.

Optionally, after the step S203, the method further includes: receiving a session message which is sent from the server and carries the identifier of the second user and session content of the second user; and outputting the session content of the second user in the session between the first user and the second user.

Optionally after the step S203, the method further includes: receiving session content input by the first user in the session between the first user and the second user, and sending the session content of the first user and the identifier of the second user to the server.

Optionally, after the step S203, the method further includes: receiving user information of the second user sent from the server, and processing and outputting the user information of the second user, such that the output user information of the second user does not reveal personal information of the second user.

Optionally, after the step S203, the method further includes: receiving user information of the first user, and processing the user information of the first user, such that the processed user information of the first user does not reveal personal information of the first user.

Optionally, after the step S203, the method further includes: receiving and forwarding a request sent from the first user for obtaining the use information of the second user to the server if the session between the first user and the second user reaches a first preset condition.

Optionally, if the second user agrees to the request of the first user for obtaining the user information, the method further includes: receiving the user information of the second user sent from the server.

The first condition may be that in the session between the first user and the second user, the number of conversations reaches a preset number.

Optionally, after the step S203, the method further includes: receiving and outputting opening remarks of the second user sent from the server. The opening remarks of the second user are words, photos, audio files or video files pre-stored in the server by the second user.

The embodiment of the present disclosure provides a method for establishing a session, in which after a first user sends a session request, a session target is matched to the first user, and only an identifier of the session target (i.e., a second user) of the first user is returned back to a terminal so as to establish a session, such that the terminal may distinguish conversations through the identifier, and thus personal information of the users cannot be output without the users' permission. The task of establishing a temporary session for the users is accomplished without revealing the personal information of the users, and the security of the personal information of the users is enhanced.

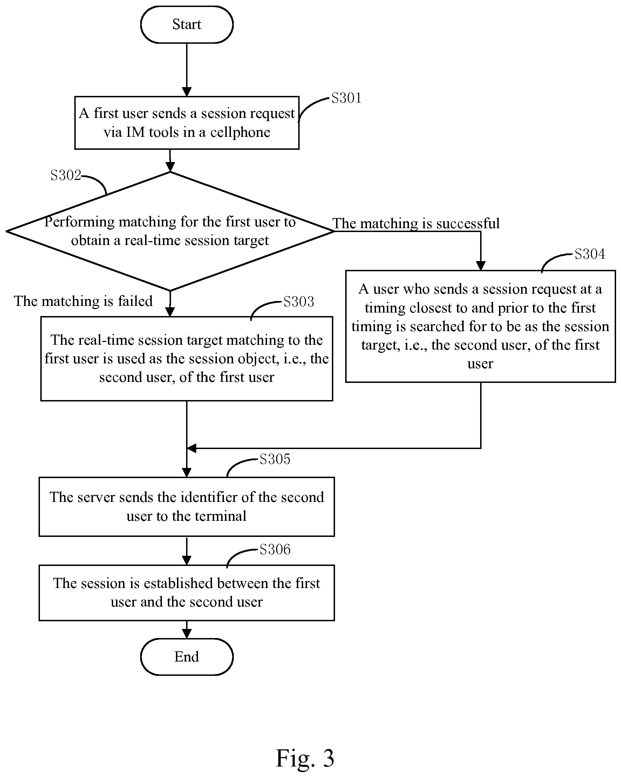

As shown in Fig. 3, an embodiment of the present disclosure provides a method for establishing a session. The method includes the following steps.

In step S301, a first user sends a session request via IM tools in a cellphone.

In the present embodiment, the cellphone is described as an example of a terminal for convenience, the first user installs the IM tools in the cellphone, and the first user successfully logs in with an IM account in the cellphone. The session request in the present embodiment refers to a request for establishing a conversation with a non-friend user, i.e., for requiring a server to match a conversation target (session target) to the first user.

It should be noted that when the embodiment of the present disclosure is implemented, in addition to the cellphone, the terminal may also be a tablet PC, a notebook computer, a PC, etc., which is not limited to the cellphone.

Optionally, a time axis is set in the server for recording a timing at which a user sends a session request to the server. Correspondingly, when receiving the session request sent from the first user, the server records the current timing as a first timing.

In step S302, the server matches a real-time session target to the first user, if the match is successful, the process proceeds to step S303; and if the match is failed, the process proceeds to step S304.

In the present embodiment, the real-time session target may be defined as that other users who send a session request within a first duration range prior to or after the first timing and a center point of the first duration range is the first timing.

In the related art, if a session target is matched to a user, only random matching can be performed. In the embodiment of the present disclosure, by using the manner of matching the real-time session target to the first user, user experience may be improved, so as to achieve real-time capability of matching and establishing the session, in such a manner that the user feels that the session target, that is matched after the user sends the session request, is also a user who needs to establish the session.

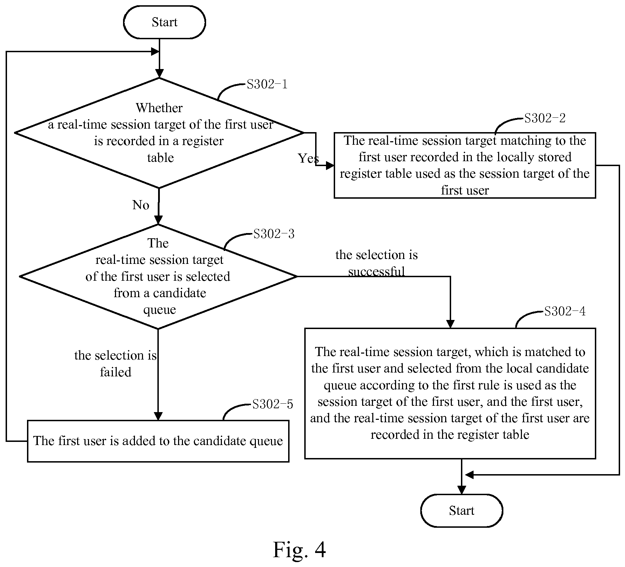

Optionally, as shown in Fig. 4, the server may be performed in the following manner for matching the real-time session target to the first user.

In step S302-1, it is determined whether a real-time session target matching to the first user is recorded in a locally stored register table; if the real-time session target matching to the first user is recorded in the locally stored register table, the process proceeds to step S302-2; and if the real-time session target matching to the first user is not recorded in the locally stored register table, the process proceeds to step S302-3.

Optionally, a register table is created locally in the server, session targets of respective users are recorded in real-time in the register table, and when the server needs to match a real-time session target to the user, the session target may be searched for in the register table.

In step S302-2, the real-time session target matching to the first user recorded in the locally stored register table is used as the session target of the first user, and the process ends.

In step S302-3, the real-time session target of the first user is selected from a local candidate queue according to a first preset rule; if the selection is successful, the process proceeds to step S302-4; and if the selection is failed, the process proceeds to step S302-5.

Optionally, a candidate queue is also locally stored in the server for matching a real-time session target to the user to whom the real-time session target is not matched in the step S302-1.

Optionally, the first rule may be any one or any combination of the following rules: rule 1 in which a user who has different gender from the first user is selected from the candidate queue with a first preset probability to be used as the real-time session target of the first user; rule 2 in which a user who is in the same city as the first user is selected from the candidate queue with a second preset probability to be used as the real-time session target matching to the first user.

User information of each user is stored in the server, and the user information includes geographic location information and gender of each user. The first rule is only an optional manner, and the first rule may define the matching for the session target which is based on information such as the user's hobbies, school.

In the present embodiment, the method is described by taking both of the first probability and the second probability being 100% as an example. The selecting the real-time session target of the first user from the local candidate queue according to the first preset rule may be as follows: randomly selecting a user, who has different gender from the first user but in the same city as the first user, from the local candidate queue as the real-time session target of the first user.

In step S302-4, the real-time session target, which is matched to the first user and selected from the local candidate queue according to the first rule, is used as the session target of the first user, and the first user and the real-time session target of the first user are recorded in the register table, and the process ends.

In step S302-5, the first user is added to the candidate queue, and the process returns to the step S302-1, if the real-time session target matching to the first user is not successfully matched when reaching first duration, it is determined that the real-time session target matching to the first user does not exist, and the process ends.

Optionally, if the real-time session target is not matched to the first user when first duration is exceeded, it is determined that the real-time session target of the first user does not exist.

Optionally, when the first user sends the session request, the cellphone of the first user displays a searching animation and duration of the searching animation is longer than or equal to the first duration, such that the server matches the real-time session target to the first user within the first duration.

The first duration may be set by a developer or the user, for example, in the present embodiment, the first duration may be set as 5 seconds.

Optionally, after the first user is added to the candidate queue for the preset first duration, the first user is deleted from the candidate queue.

In step S303, the real-time session target matching to the first user is used as the session target (i.e., the second user) of the first user, and the process proceeds to step S305.

In step S304, a user who sends a session request at a timing closest to and prior to the first timing is searched for to be as the session target (i.e., the second user) of the first user, and the process proceeds to step S305.

Optionally, step S304 may be performed in the following manner: the first timing on the time axis created in the server is taken as a starting point, the user who sends the session request to the server is searched for in a forwarding order; if a user who meets a second preset rule is found, the user who meets the second present rule is used as the session target of the first user.

Optionally, the second rule may be any one or any combination of the following rules: rule 3, in which a user who has different gender from the first user, is selected with a third preset probability to be used as the session target of the first user; rule 4, in which a user who is in the same city as the first user, is selected with a fourth preset probability to be used as the real-time session target matching to the first user.

User information of each user is stored in the server, and the user information includes geographic location information and gender of each user. The second rule is only an optional manner, and the second rule may define the matching for the session target which is based on information such as the user's hobbies, school.

In the present embodiment, the method is described by taking both of the third probability and the fourth probability being 70% as an example. The step, in which the first timing on the time axis created in the server is taken as the starting point, the user who sends the session request to the server is searched for in a forwarding order, when a user who meets a second preset rule is found, the user who meets the second present rule is used as the session target of the first user, may be as follows.

Gender and city of the session target of the first user is determined according to the third probability and the fourth probability;

The first timing on the time axis created in the server is taken as the starting point, the user who sends the session request to the server is searched for in a forwarding order, if a user who meets the gender and the city of the session target of the first user determined according to the third probability and fourth probability is found, the user who meets the gender and the city of the session target of the first user determined according to the third probability and the fourth probability is used as the session target of the first user.

The method is described by taking an example that the third probability is 70% and the first user is male, the determining the gender of the session target of the first user according to the third probability may be performed in the following manner:

A token bucket is created, 70% of tokens is marked as female and 30% of the tokens is marked as male, a token is randomly assigned to the first user, and the gender marked on the token is used as the gender of the session target of the first user.

Similarly, the method is described by taking an example that the fourth probability is 70% and the first user is in Beijing, the determining the city of the session target of the first user according to the fourth probability may be performed in the following manner.

A token bucket is created, 70% of tokens is marked as Beijing and 30% thereof is marked as non-Beijing, a token randomly assigned to the first user, and the city marked on the token is used as the city of the session target of the first user.

In step S305, the server sends the identifier of the second user to the terminal.

The identifier is used for the terminal to distinguish the session target of the first user, and the identifier is invisible to the first user.

Optionally, after the first user sends the session request to the server via the terminal, the terminal establishes a temporary session between the first user and the second user, and hides the identifier of the second user, that is, the terminal does not output the identifier of the second user, but optionally only outputs the session content of the first user and the second user, such that the first user cannot obtain the identifier of the second user, thus the first user cannot obtain the personal information of the second user without the second user's permission.

Optionally, the identifier is invisible to the user, after the terminal receives the identifier of the second user, the terminal establishes the session between the first user and the second user, and Optionally the session may be output in a form of a session group in the IM tools, so as to facilitate the session between the first user and the second user.

The identifier may be the IM account of the user, but it is invisible to the session target. The identifier may also be a secondary account registered under the IM account by the user, the secondary account is only used for an instant session between the users, and the user cannot obtain the user information of each other through the secondary account.

For example, when the first user operates several groups of conversations at present, it may be determined which group the session belong to according to the identifier of the second user; or when the first user receives session content sent from the server, it may be determined which user sends the session content according to the identifier sent along with the session content.

In step S306, the session is established between the first user and the second user, and the process ends.

Optionally, after the session between the first user and the second user is established, only respective conversation information is displayed in the session to ensure that user privacy is not revealed.

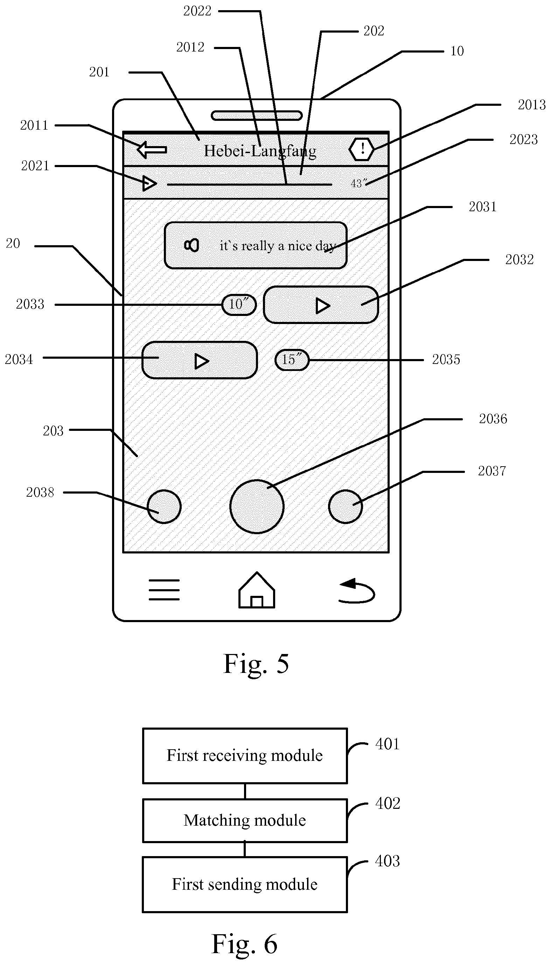

In the present embodiment, for example, the session content of the users may be transferred in the form of the audio files. Fig. 5 is a diagram illustrating an interface after the session between the first user and the second user is established.

10 denotes a cellphone, and 20 denotes a display area of the cellphone.

201 denotes a notification bar of the session, wherein 2011 denotes a function button for returning the previous interface, 2012 is used to display the city of the session target, and 2013 also denotes a function button for setting a parameter.

202 denotes the opening remarks of the session target, wherein 2021 denotes a play button for playing the opening remarks of the session target, 2022 denotes a play progress bar, and 2013 denotes duration of the opening remarks of the session target.

203 denotes a chat frame, wherein 2031 denotes a random tip generated by the server, 2032 denotes the session content (audio files) sent from the first user and is provided with a play button, 2033 denotes duration of the session content sent from the first user, 2034 denotes the session content (audio files) sent from the second user and is provided with a play button, 2035 denotes duration of the session content sent from the second user, 2036 denotes a function button for recording an audio file to be sent as session content, 2037 denotes a function button for displaying a chat status, and 2038 denotes a function button for changing a session target.

As shown in Fig. 5, after the session between the first user and the second user is established, the first user and the second user may sends the session content to each other. In the present embodiment, the session content are only described to be the audio files, but in actual implementation, the session content may also be such content that may be transmitted through the network such as words, photos or video files.

Another alternative embodiment

In the session between the first user and the second user, the processed user information of each other is displayed, the processed user information does not reveal the user's personal information.

Optionally, the processing of the user information of each other may be carried out by the server or the terminal.

For example, an avatar of each other is displayed in the chat frame, and the avatar is subjected to a preset fuzzy processing, the fuzzy processing may increase frosted glass effect of the avatar of each other or edits the user's avatar, such that main face features of the user is concealed, thus the user's privacy may be effectively protected.

Optionally, when the session between the first user and the second user reaches the first condition, the first user and the second user may apply for viewing the user information of each other.

The embodiment of the present disclosure provides a method for establishing a session, in which after a first user sends a session request, a session target is matched to the first user by a server, and only an identifier of the session target (i.e., a second user) of the first user is returned back to a terminal so as to establish a session, such that the terminal may distinguish conversations through the identifier, thus personal information of the users cannot be output without the users' permission. The task of establishing a temporary session for the users is accomplished without revealing the personal information of the users, and the security of the personal information of the users is enhanced.

As shown in Fig. 6, the present embodiment provides a server for establishing a session, including: a first receiving module 401 configured to receive a session request sent from a first user via a terminal; a matching module 402 configured to match a session target (i.e., a second user) to the first user; and a first sending module 403 configured to send an identifier of the second user to the terminal so that the terminal establishes a session between the first user and the second user.

The identifier is used for the terminal to distinguish the session target of the first user, and the identifier is invisible to the first user.

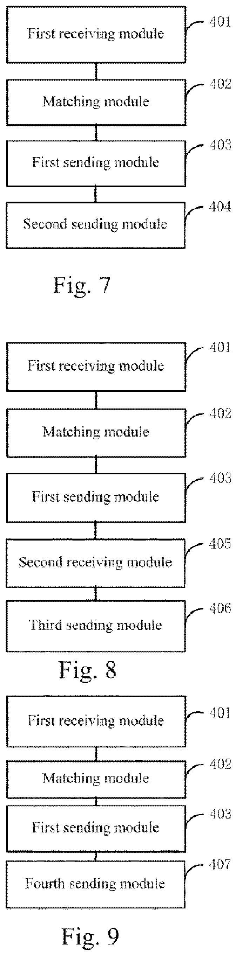

Optionally, as shown in Fig. 7, the server may further include: a second sending module 404 configured to send a session message which carries the identifier of the second user and session content of the second user to the terminal, after the first sending module 403 sends the identifier of the second user to the terminal so that the terminal establishes the session between the first user and the second user.

Optionally, as shown in Fig. 8, the server may further include: a second receiving module 405 configured to receive session content input by the first user in the session between the first user and the second user and the identifier of the second user sent from the terminal, after the first sending module 403 sends the identifier of the second user to the terminal so that the terminal establishes the session between the first user and the second user; and a third sending module 406 configured to send a session message which carries an identifier of the first user, the identifier of the second user and the session content of the first user to the second user.

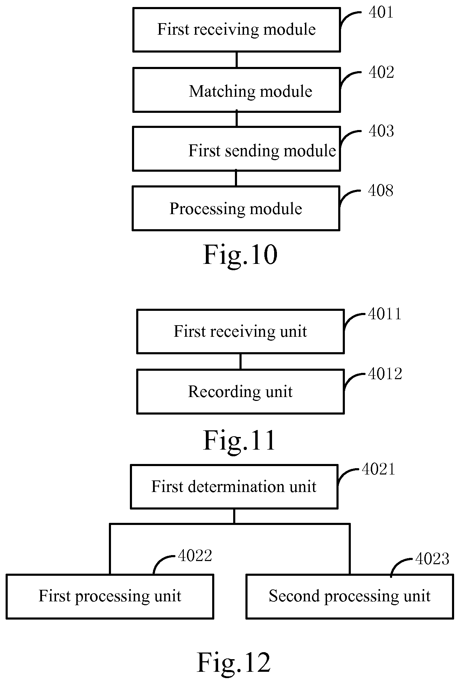

Optionally, as shown in Fig. 9 or Fig. 10, the server may further include: a fourth sending module 407 configured to send user information of the second user to the terminal, after the first sending module 403 sends the identifier of the second user to the terminal so that the terminal establishes the session between the first user and the second user; or, a processing module 408 configured to process the user information of the second user, after the first sending module 403 sends the identifier of the second user to the terminal so that the terminal establishes the session between the first user and the second user, such that the processed user information of the second user does not reveal personal information of the second user, and is configured to send the processed user information of the second user to the terminal.

Optionally, as shown in Fig. 11, the first receiving module 401 includes: a first receiving unit 4011 configured to receive a session request sent from a first user via a terminal; a recording unit 4012 configured to record a timing, at which the session request of the first user is received, as a first timing.

As shown in Fig. 12, the matching module 402 includes: a first determination unit 4021 configured to determine whether a real-time session target matching to the first user exists according to the first timing; a first processing unit 4022 configured to use the real-time session target matching to the first user as the second user, if the first determination unit 4021 determines that the real-time session target matching to the first user exists; a second processing unit 4023 configured to search for a user, who sends a session request at a timing closest to and prior to the first timing, as the second user, if the first determination unit 4021 determines that the real-time session target matching to the first user does not exists. The real-time session target matching to the first user is a user who sends a session request within a first duration range prior to or after the first timing.

Optionally, the first determination unit 4021 is configured to perform operations of the following steps.

Step A: it is determined whether a session target matching to the first user is recorded in a locally stored register table; if the session target matching to the first user is recorded in the locally stored register table, the process proceeds to step B; and if the session target matching to the first user is not recorded in the locally stored register table, the process proceeds to step C.

Step B: the session target matching to the first user recorded in the locally stored register table is used as the real-time session target matching to the first user, and the process ends.

Step C: the session target matching to the first user is selected from a local candidate queue according to a first preset rule, if the selection is successful, the process proceeds to step D; and if the selection is failed, the process proceeds to step E.

Step D: the session target, which is matched to the first user and selected from the local candidate queue according to the first rule, is used as the real-time session target matching to the first user, and the first user and the real-time session target matching to the first user is recorded in the register table, and the process ends.

Step E: the first user is added to the candidate queue, and the process returns to the step A, if the real-time session target matching to the first user is not successfully matched when reaching the first duration, it is determined the real-time session target matching to the first user does not exist, and the process ends.

Optionally, the first rule is any one or any combination of the following rules: a rule in which a user who has different gender from the first user is selected from the candidate queue with a first preset probability to be used as the real-time session target matching to the first user; and a rule in which a user who is in the same city as the first user is selected from the candidate queue with a second preset probability to be used as the real-time session target matching to the first user.

Optionally, the second processing unit 4023 is configured to search for a user who sends a session request prior to the first timing in a forwarding order in accordance with the timing at which the session request is sent, if a user who meets a second preset rule is found, the user who meets the second present rule is used as the second user.

Optionally, the second rule is any one or any combination of the following rules: a rule in which a user, who has different gender from the first user, is selected with a third preset probability to be used as the second user; and a rule in which a user, who is in the same city as the first user, is selected with a fourth preset probability to be used as the second user.

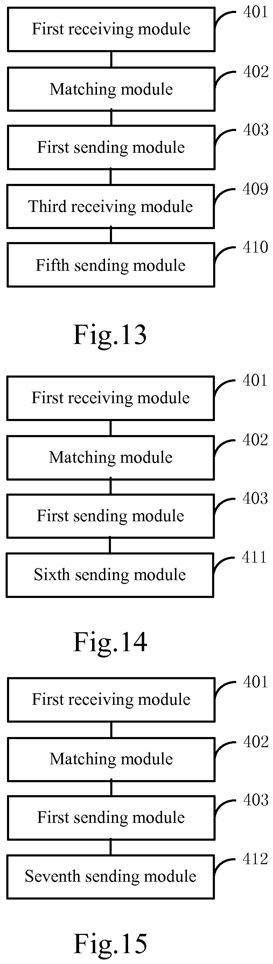

Optionally, as shown in Fig. 13, the server may further include: a third receiving module 409 configured to receive a request sent from the first user for obtaining the user information of the second user when the session between the first user and the second user reaches a first preset condition, after the first sending module 403 sends the identifier of the second user to the terminal so that the terminal establishes the session between the first user and the second user; and a fifth sending module 410 configured to send the request of the first user for obtaining the user information to the second user

Optionally, as shown in Fig. 14, the server may further include: a sixth sending module 411 configured to send the user information of the second user to the terminal when the second user agrees the request of the first user for obtaining the user information.

Optionally, the first condition is that in the session between the first user and the second user, the number of conversations reaches a preset number.

Optionally, as shown in Fig. 15, the server may further include: a seventh sending module 412 configured to send opening remarks of the second user to the terminal, after the first sending module 403 sends the identifier of the second user to the terminal so that the terminal establishes the session between the first user and the second user. The opening remarks of the second user are words, photos, audio files or video files locally pre-stored by the second user.

The embodiment of the present disclosure provides a server for establishing a session, in which after a first user sends a session request, a session target is matched to the first user, and only an identifier of the session target, a second user, of the first user is returned back to a terminal so as to establish a session, such that the terminal may distinguish conversations through the identifier, thus no personal information of the users is output without the users' permission, meanwhile the task of establishing a temporary session for the users is accomplished without revealing the personal information of the users, and the security of the personal information of the users is enhanced.

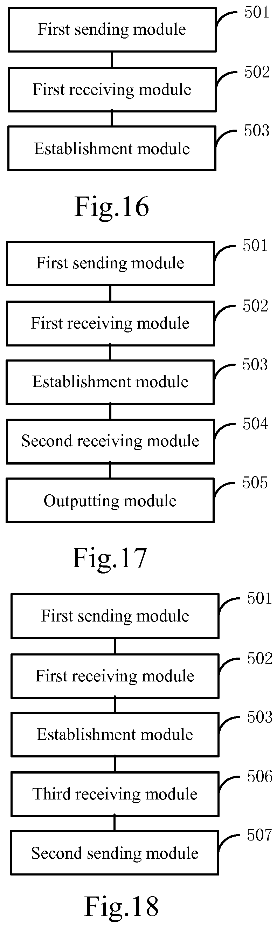

As shown in Fig. 16, the present embodiment provides a device for establishing a session including: a first sending module 501 configured to send a session request of a first user to a server; a first receiving module 502 configured to receive an identifier of a second user sent from the server; an establishment module 503 configured to establish a session between the first user and the second user according to the identifier of the second user and hide the identifier of the second user. The second user is a session target obtained by the server though performing matching on first user, and the identifier is used to distinguish the session target of the first user.

Optionally, as shown in Fig. 17, the device may further include: a second receiving module 504 configured to receive a session message that is sent from the server and carries the identifier of the second user and session content of the second user, after the establishment module 503 establishes the session between the first user and the second user according to the identifier of the second user; and an output module 505 configured to output the session content of the second user in the session between the first user and the second user.

Optionally, as shown in Fig. 18, the device may further include: a third receiving module 506 configured to receive session content input by the first user in the session between the first user and the second user, after the establishment module 503 establishes the session between the first user and the second user according to the identifier of the second user; and a second sending module 507 configured to send the session content of the first user and the identifier of the second user to the server.

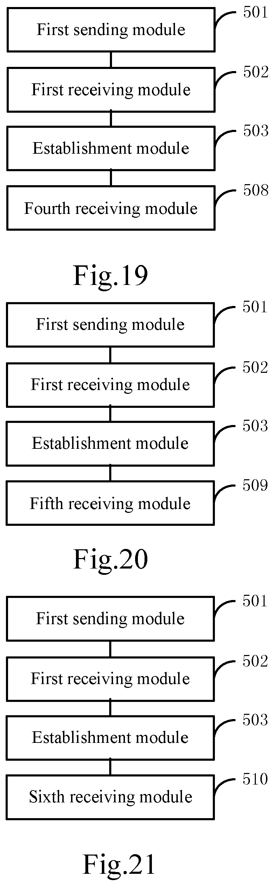

Optionally, as shown in Fig. 19, the device may further include: a fourth receiving module 508 configured to receive user information of the second user sent from the server, and to process and to output the user information of the second user, such that the output user information of the second user does not reveal personal information of the second user, after the establishment module 503 establishes the session between the first user and the second user according to the identifier of the second user.

Optionally, as shown in Fig. 20, the device may further include: a fifth receiving module 509 configured to receive user information of the first user, and to process the user information of the first user, such that the processed user information of the first user does not reveal personal information of the first user, after the establishment module 503 establishes the session between the first user and the second user according to the identifier of the second user.

Optionally, as shown in Fig. 21, the device may further include: a sixth receiving module 510 configured to receive and forward a request sent from the first user for obtaining the use information of the second user to the server when the session between the first user and the second user reaches a first preset condition, after the establishment module 503 establishes the session between the first user and the second user according to the identifier of the second user.

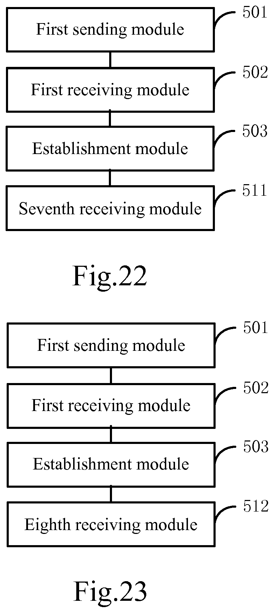

Optionally, as shown in Fig. 22, the device may further include: a seventh receiving module 511 configured to receive the user information of the second user sent from the server when the second user agrees the request of the first user for obtaining the user information.

Optionally, the first condition is that in the session between the first user and the second user, the number of conversations reaches a preset number.

As shown in Fig. 23, the device may further include: an eighth receiving module 512 configured to receive and output opening remarks of the second user sent from the server, after the establishment module 503 establishes the session between the first user and the second user according to the identifier of the second user. The opening remarks of the second user are words, photos, audio files or video files pre-stored in the server by the second user.

The embodiment of the present disclosure provides a device for establishing a session, in which after a first user sends a session request, a session target is matched to the first user by a server, and only an identifier of the session target, a second user, of the first user returned back by the server is received, so as to establish a session, such that a terminal may distinguish conversations through the identifier, thus no personal information of the users is output without the users' permission, meanwhile the task of establishing a temporary session for the users is accomplished without revealing the personal information of the users, and the security of the personal information of the users is enhanced.

The present embodiment further provides a system for establishing a session including any server for establishing a session as described above and any device for establishing a session as described above.

The embodiment of the present disclosure provides a system for establishing a session, after a first user sends a session request, a session target is matched to the first user, and only an identifier of the session target ( i.e., a second user) of the first user is returned back to a terminal so as to establish a session, such that the terminal distinguishes conversations through the identifier, thus no personal information of the users is output without the users' permission, meanwhile the task of establishing a temporary session for the users is accomplished without revealing the personal information of the users, and the security of the personal information of the users is enhanced.

An embodiment of the present disclosure further provides an apparatus, and the apparatus may be a server.

The apparatus includes: one or more processors, a memory and one or more programs. The one or more programs is stored in the memory and configured to be executed by the one or more processors. The one or more programs have the following functions: receiving a session request sent from a first user via a terminal; performing matching to obtain a session target (i.e., a second user) to the first user; and sending an identifier of the second user to the terminal so that the terminal establishes a session between the first user and the second user. The identifier is used for the terminal to distinguish the session target of the first user, and the identifier is invisible to the first user.

Optionally, the one or more programs also have the following functions: sending a session message which carries the identifier of the second user and session content of the second user to the terminal after the identifier of the second user is sent to the terminal so that the terminal establishes the session between the first user and the second user.

Optionally, the one or more programs also have the following functions: receiving session content input by the first user in the session between the first user and the second user and the identifier of the second user sent from the terminal, and sending a session message which carries an identifier of the first user, the identifier of the second user and the session content of the first user to the second user, after the identifier of the second user is sent to the terminal so that the terminal establishes the session between the first user and the second user.

Optionally, the one or more programs also have the following functions: sending user information of the second user to the terminal, after the identifier of the second user is sent to the terminal so that the terminal establishes the session between the first user and the second user; or, processing the user information of the second user such that the processed user information of the second user does not reveal personal information of the second user, and sending the processed user information of the second user to the terminal.

Optionally, the receiving the session request sent from the first user via the terminal may be performed in the following manner: receiving a session request sent from a first user via a terminal, and recording a timing at which the session request of the first user is received as a first timing.

Optionally, the performing matching to obtain the session target (i.e., the second user) to the first user may be performed in the following manner: determining whether a real-time session target matching to the first user exists according to the first timing; using the real-time session target matching to the first user as the second user if the real-time session target matching to the first user exists; and searching for a user, who sends a session request at a timing closest to and prior to the first timing, as the second user if the real-time session target matching to the first user does not exist. The real-time session target matching to the first user is a user who sends a session request within a first duration range prior to or after the first timing.

Optionally, the determining whether the real-time session target matching to the first user exists may be performed in the following manner.

Step A, it is determined whether a session target matching to the first user is recorded in a locally stored register table, if the session target matching to the first user is recorded in the locally stored register table, the process proceeds to step B; and if the session target matching to the first user is not recorded in the locally stored register table, the process proceeds to step C.

Step B, the session target matching to the first user recorded in the locally stored register table is used as the real-time session target matching to the first user, and the process ends.

Step C, the session target matching to the first user is selected from a local candidate queue according to a first preset rule, if the selection is successful, the process proceeds to step D; and if the selection is failed, the process proceeds to step E.

Step D, the session target, which is matched to the first user and selected from the local candidate queue according to the first rule, is used as the real-time session target matching to the first user, and the first user and the real-time session target matching to the first user is recorded in the register table, and the process ends.

Step E, the first user is added to the candidate queue, and the process returns to the step A, if the real-time session target matching to the first user is not successfully matched when reaching the first duration, it is determined that the real-time session target matching to the first user does not exist, and the process ends.

Optionally, the first rule may be any one or any combination of the following rules: a rule in which a user, who has different gender from the first user, is selected from the candidate queue with a first preset probability to be used as the real-time session target matching to the first user; and a rule in which a user, who is in the same city as the first user is selected from the candidate queue, with a second preset probability to be used as the real-time session target matching to the first user.

Optionally, the searching for the user who sends the session request at the timing closest to and prior to the first timing as the second user may be performed in the following manner: searching for a user who sends a session request prior to the first timing in a forwarding order in accordance with the timing at which the session request is sent, if a user who meets a second preset rule is found, the user who meets the second present rule is used as the second user.

Optionally, the second rule may be any one or any combination of the following rules: a rule in which a user who has different gender from the first user is selected with a third preset probability to be used as the second user; and a rule in which a user who is in the same city as the first user is selected with a fourth preset probability to be used as the second user.

Optionally, the one or more programs also have the following functions: after the identifier of the second user is sent to the terminal so that the terminal establishes the session between the first user and the second user, receiving a request sent from the first user for obtaining the user information of the second user when the session between the first user and the second user reaches a first preset condition; and sending the request of the first user for obtaining the user information to the second user.

Optionally, the one or more programs also have the following functions: sending the user information of the second user to the terminal when the second user agrees the request of the first user for obtaining the user information.

Optionally, the first condition may be that in the session between the first user and the second user, the number of conversations reaches a preset number.

Optionally, the one or more programs also have the following functions: sending opening remarks of the second user to the terminal after the identifier of the second user is sent to the terminal so that the terminal establishes the session between the first user and the second user. The opening remarks of the second user are words, photos, audio files or video files locally pre-stored by the second user.

The embodiment of the present disclosure provides an apparatus, after a first user sends a session request via a terminal, a session target is matched to the first user, and only an identifier of the session target, a second user, of the first user is returned back to a terminal so as to establish a session, such that the terminal may distinguish conversations through the identifier, thus no personal information of the users is output without the users' permission, meanwhile the task of establishing a temporary session for the users is accomplished without revealing the personal information of the users, and the security of the personal information of the users is enhanced.

In addition, the present embodiment further provides a nonvolatile readable storage medium for storing one or more programs, wherein the one or more programs are applied to an apparatus having a touchscreen such that the apparatus may execute instructions of the following steps: receiving a session request sent from a first user via a terminal; performing matching to obtain a session target (i.e., a second user) to the first user; and sending an identifier of the second user to the terminal so that the terminal establishes a session between the first user and the second user. The identifier is used for the terminal to distinguish the session target of the first user, and the identifier is invisible to the first user.

Optionally, the one or more programs may also make the apparatus execute instructions of the following steps: sending a session message, which carries the identifier of the second user and session content of the second user, to the terminal, after the identifier of the second user is sent to the terminal so that the terminal establishes the session between the first user and the second user.

Optionally, the one or more programs may also make the apparatus execute instructions of the following steps: receiving session content input by the first user in the session between the first user and the second user and the identifier of the second user which are sent from the terminal, and sending a session message, which carries an identifier of the first user, the identifier of the second user and the session content of the first user, to the second user, after the identifier of the second user is sent to the terminal so that the terminal establishes the session between the first user and the second user.

Optionally, the one or more programs may also make the apparatus execute instructions of the following steps: sending user information of the second user to the terminal, after the identifier of the second user is sent to the terminal so that the terminal establishes the session between the first user and the second user; or processing the user information of the second user such that the processed user information of the second user does not reveal personal information of the second user, and sending the processed user information of the second user to the terminal.

Optionally, the receiving the session request sent from the first user via the terminal may be performed in the following manner: receiving a session request sent from a first user via a terminal, and a recording timing, at which the session request of the first user is received, as a first timing.

Optionally, the performing matching to obtain the session target, the second user, to the first user may be performed in the following manner: determining whether a real-time session target matching to the first user exists according to the first timing; using the real-time session target matching to the first user as the second user if the real-time session target matching to the first user exists; and searching for a user who sends a session request at a timing closest to and prior to the first timing as the second user if the real-time session target matching to the first user does not exist. The real-time session target matching to the first user is a user who sends a session request within a first duration range prior to or after the first timing.

Optionally, the determining whether the real-time session target matching to the first user exists may be performed in the following manner.

Step A, it is determined whether a session target matching to the first user is recorded in a locally stored register table, if the session target matching to the first user is recorded in the locally stored register table, the process proceeds to step B; and if the session target matching to the first user is not recorded in the locally stored register table, the process proceeds to step C.

Step B, the session target matching to the first user recorded in the locally stored register table is used as the real-time session target matching to the first user, and the process ends.

Step C, the session target matching to the first user is selected from a local candidate queue according to a first preset rule, if the selection is successful, the process proceeds to step D; and if the selection is failed, the process proceeds to step E.

Step D, the session target, which is matched to the first user and selected from the local candidate queue according to the first rule, is used as the real-time session target matching to the first user, and the first user and the real-time session target matching to the first user is recorded in the register table, and the process ends.

Step E, the first user is added to the candidate queue, and the process returns to the step A, if the real-time session target matching to the first user is not successfully matched when reaching the first duration, it is determined the real-time session target matching to the first user does not exist, and the process ends.

Optionally, the first rule may be any one or any combination of the following rules: a rule in which a user, who has different gender from the first user, is selected from the candidate queue with a first preset probability to be used as the real-time session target matching to the first user; and a rule in which a user, who is in the same city as the first user, is selected from the candidate queue with a second preset probability to be used as the real-time session target matching to the first user.

Optionally, the searching for the user who sends the session request at the timing closest to and prior to the first timing as the second user may be performed in the following manner: searching for a user who sends a session request prior to the first timing in a forwarding order in accordance with the timing at which the session request is sent, if a user who meets a second preset rule is found, using the user who meets the second present rule as the second user.

Optionally, the second rule may be any one or any combination of the following rules: a rule in which a user, who has different gender from the first user, is selected with a third preset probability to be used as the second user; and a rule in which a user, who is in the same city as the first user, is selected with a fourth preset probability to be used as the second user.

Optionally, the one or more programs may also make the apparatus execute instructions of the following steps: receiving a request sent from the first user for obtaining the user information of the second user when the session between the first user and the second user reaches a first preset condition, after the identifier of the second user is sent to the terminal so that the terminal establishes the session between the first user and the second user; and the request of the first user for obtaining the user information is sent to the second user.

Optionally, the one or more programs may also make the apparatus execute instructions of the following steps: sending the user information of the second user to the terminal if the second user agrees the request of the first user for obtaining the user information.

Optionally, the first condition may be that in the session between the first user and the second user, the number of conversations reaches a preset number.

Optionally, the one or more programs may also make the apparatus execute instructions of the following steps: sending opening remarks of the second user to the terminal, after the identifier of the second user is sent to the terminal so that the terminal establishes the session between the first user and the second user. The opening remarks of the second user are words, photos, audio files or video files locally pre-stored by the second user.

The embodiment of the present disclosure provides a nonvolatile storage medium, an apparatus having the nonvolatile storage medium matches a session target to a first user, after the first user sends a session request, and only feeds back an identifier of the session target, a second user, of the first user to a terminal so as to establish a session, such that the terminal distinguishes conversations through the identifier, thus no personal information of the users is output without the users' permission, meanwhile the task of establishing a temporary session for the users is accomplished without revealing the personal information of the users, and the security of the personal information of the users is enhanced.

An embodiment of the present disclosure further provides an apparatus, for example, the apparatus may be a cellphone, a tablet PC, a mobile computer and so on.

The apparatus includes: one or more processors, a memory and one or more programs stored in the memory and configured to be executed by the one or more processors. The one or more programs have the following functions: sending a session request of a first user to a server; receiving an identifier of a second user sent from the server; and establishing a session between the first user and the second user according to the identifier of the second user and hiding the identifier of the second user. The second user is a session target obtained by the server though performing matching on first user, and the identifier is used to distinguish the session target of the first user.

Optionally, the one or more programs also have the following functions: receiving a session message that is sent from the server and carries the identifier of the second user and session content of the second user, after the session between the first user and the second user is established according to the identifier of the second user; outputting the session content of the second user in the session between the first user and the second user.

Optionally, the one or more programs also have the following functions: receiving session content input by the first user in the session between the first user and the second user, and sending the session content of the first user and the identifier of the second user to the server after the session between the first user and the second user is established according to the identifier of the second user.

Optionally, the one or more programs also have the following functions: receiving user information of the second user sent from the server, and processing and outputting the user information of the second user, such that the output user information of the second user does not reveal personal information of the second user, after the session between the first user and the second user is established according to the identifier of the second user.

Optionally, the one or more programs also have the following functions: receiving user information of the first user, and processing the user information of the first user, such that the processed user information of the first user does not reveal personal information of the first user, after the session between the first user and the second user is established according to the identifier of the second user.

Optionally, the one or more programs also have the following functions: receiving and forwarding a request sent from the first user for obtaining the use information of the second user to the server when the session between the first user and the second user reaches a first preset condition after the session between the first user and the second user is established according to the identifier of the second user.

Optionally, the one or more programs also have the following functions: receiving the user information of the second user sent from the server if the second user agrees the request of the first user for obtaining the user information.

Optionally, the first condition is that in the session between the first user and the second user, the number of conversations reaches a preset number.

Optionally, the one or more programs also have the following functions: receiving and outputting opening remarks of the second user sent from the server after the session between the first user and the second user is established according to the identifier of the second user. The opening remarks of the second user are words, photos, audio files or video files pre-stored in the server by the second user.

The embodiment of the present disclosure provides an apparatus, after a first user sends a session request and a server matches a session target to the first user, only an identifier of the session target, a second user, of the first user returned back by the server is received so as to establish a session, such that the apparatus distinguishes conversations through the identifier, thus no personal information of the users is output without the users' permission, meanwhile the task of establishing a temporary session for the users is accomplished without revealing the personal information of the users, and the security of the personal information of the users is enhanced.

In addition, the present embodiment further provides a nonvolatile readable storage medium for storing one or more programs, wherein the one or more programs are applied to an apparatus having a touchscreen such that the apparatus may execute instructions of the following steps: sending a session request of a first user to a server; receiving an identifier of a second user sent from the server; and establishing a session between the first user and the second user according to the identifier of the second user and hiding the identifier of the second user. The second user is a session target obtained by the server though performing matching on first user, and the identifier is used to distinguish the session target of the first user.

Optionally, the one or more programs may also make the apparatus execute instructions of the following steps: receiving a session message that is sent from the server and carries the identifier of the second user and session content of the second user, after the session between the first user and the second user is established according to the identifier of the second user; outputting the session content of the second user in the session between the first user and the second user.

Optionally, the one or more programs may also make the apparatus execute instructions of the following steps: receiving session content input by the first user in the session between the first user and the second user, and sending the session content of the first user and the identifier of the second user to the server after the session between the first user and the second user is established according to the identifier of the second user.

Optionally, the one or more programs may also make the apparatus execute instructions of the following steps: receiving user information of the second user sent from the server, and processing and outputting the user information of the second user, such that the output user information of the second user does not reveal personal information of the second user after the session between the first user and the second user is established according to the identifier of the second user.

Optionally, the one or more programs may also make the apparatus execute instructions of the following steps: receiving user information of the first user, and processing the user information of the first user, such that the processed user information of the first user does not reveal personal information of the first user after the session between the first user and the second user is established according to the identifier of the second user.

Optionally, the one or more programs may also make the apparatus execute instructions of the following steps: receiving and forwarding a request sent from the first user for obtaining the use information of the second user to the server when the session between the first user and the second user reaches a first preset condition after the session between the first user and the second user is established according to the identifier of the second user.

Optionally, the one or more programs may also make the apparatus execute instructions of the following steps: receiving the user information of the second user sent from the server if the second user agrees the request of the first user for obtaining the user information.

Optionally, the first condition is that in the session between the first user and the second user, the number of conversations reaches a preset number.

Optionally, the one or more programs may also make the apparatus execute instructions of the following steps: receiving and outputting opening remarks of the second user sent from the server after the session between the first user and the second user is established according to the identifier of the second user. The opening remarks of the second user are words, photos, audio files or video files pre-stored in the server by the second user.

The embodiment of the present disclosure provides a nonvolatile storage medium, an apparatus having the nonvolatile storage medium executes one or more programs stored in the nonvolatile storage medium such that the apparatus may only receive an identifier of a session target, a second user, of a first user returned back by a server after the first user sends a session request and the server matches the session target to the first user, so as to establish a session, such that the apparatus distinguishes conversations through the identifier, thus no personal information of the users is output without the users' permission, meanwhile the task of establishing a temporary session for the users is accomplished without revealing the personal information of the users, and the security of the personal information of the users is enhanced.

Through description of the above embodiments, those skilled in the art may clearly understand that the embodiments of the present disclosure may be implemented by hardware or may be implemented in a manner of software working with necessary general-purpose hardware platform. Based on this understanding, the technical solutions of the embodiments of the present disclosure may be presented in a form of software product, the software product may be stored in a nonvolatile storage medium (it may be CD-ROM, U disk, mobile HD etc.) including several instructions to make a computer apparatus (it may be a personal computer, a server, or a network apparatus etc.) carry out the methods of the various embodiments of the present disclosure.

Those skilled in the art may understand that the drawings are only diagrams of optional embodiments, modules or flows in the drawings are not necessary for carrying out the present disclosure.

Those skilled in the art may understand that the modules in the devices of the embodiments may be distributed in the devices of the embodiments according to the description of the embodiments, or may be correspondingly changed to be in one or more devices different from the present embodiment. The modules of the above embodiments may be combined into one module or may be further divided into a plurality of submodules.

The numbers of the above embodiments of the present disclosure are only for description, but not represent the importance of the embodiments.

Those skilled in the art may make various change and modifications to the present disclosure without departing from the scope of the present invention which is defined by the appended claims.

## Claims

1. A method for establishing a session, wherein the method comprises, at a server:
receiving (S101, S301) a session request sent from a first user via a terminal;
obtaining a session target, i.e., a second user, to the first user; and
sending (S103, S305) an identifier of the second user to the terminal so that the terminal establishes a session between the first user and the second user;
wherein the identifier is used for the terminal to distinguish a session target of the first user, and the identifier is invisible to the first user, wherein receiving (S301) the session request comprises:
recording a timing at which the session request of the first user is received as a first timing; and wherein obtaining the session target comprises;
performing matching (S302) to obtain the session target, by;
determining (S302-1) whether a session target matching to the first user is recorded in a locally stored register table; and if a session target matching to the first user is recorded in the locally stored register table, using (S302-2) the session target matching to the first user recorded in the locally stored register table as the real-time session target matching to the first user; and if a session target matching to the first user is not recorded in the locally stored register table, searching for a user who sends a session request at a timing closest to and prior to the first timing, wherein when the said user is found, selecting the said user as the session target, i.e. as the second user; wherein the real-time session target matching to the first user is a user who sends a session request within a first duration range prior to the first timing.

2. The method according to claim 1, wherein the performing matching to obtain the session target further comprises:
step A:
determining (S302-1) whether the session target matching to the first user is recorded in the locally stored register table,
the process proceeding to step B if the session target matching to the first user is recorded in the locally stored register table; and
the process proceeding to step C if the session target matching to the first user is not recorded in the locally stored register table;
step B:
using (S302-2) the session target matching to the first user recorded in the locally stored register table as the real-time session target matching to the first user, and the process ending;
step C:
selecting (S302-3) the session target matching to the first user from a local candidate queue according to a first preset rule,
the process proceeding to step D if the selection is successful; and
the process proceeding to step E if the selection is failed;
step D:
using (S302-4) the session target, which is matched to the first user and selected from the local candidate queue according to a first rule, as the real-time session target matching to the first user, and
recording the first user and the real-time session target matching to the first user in the register table, and the process ending; and
step E:
adding (S302-5) the first user to the candidate queue, and the process returning to the step A,
determining the real-time session target matching to the first user does not exist, and the process ending if the real-time session target matching to the first user is not successfully matched when reaching a first duration.

3. The method according to claim 2, wherein the first rule is any one or any combination of the following rules:
a rule in which a user, who has different gender from the first user, is selected from the candidate queue with a first preset probability to be used as the real-time session target matching to the first user; and
a rule in which a user, who is in the same city as the first user, is selected from the candidate queue with a second preset probability to be used as the real-time session target matching to the first user.

4. The method according to claim 3, wherein the searching (S304) for the user who sends the session request at the timing closest to and prior to the first timing as the second user is performed in the following manner:
searching for the user who sends the session request prior to the first timing in a forwarding order in accordance with the timing at which the session request is sent,
using a user who meets a second present rule as the second user if the user who meets the second preset rule is found.

5. The method according to claim 4, wherein the second rule is any one or any combination of the following rules:
a rule in which a user, who has different gender from the first user, is selected with a third preset probability to be used as the second user; and
a rule in which a user, who is in the same city as the first user, is selected with a fourth preset probability to be used as the second user.

6. A method for establishing a session, the method comprising, at a user terminal:
sending (S201) a session request of a first user to a server at a first timing;
receiving (S202) an identifier of a second user sent from the server; and
establishing (S203) a session between the first user and the second user according to the identifier of the second user and hiding the identifier of the second user;
wherein the second user is a session target obtained by the server through determining (S302-1) whether a session target matching to the first user is recorded in a locally stored register table; if a session target matching to the first user is recorded in the locally stored register table, using (S302-2) the session target matching to the first user recorded in the locally stored register table as the real-time session target matching to the first user; and if a session target matching to the first user is not recorded in the locally stored register table, performing real-time session target matching to the first user according to the first timing, and by searching for a user who sends a session request at a timing closest to and prior to the first timing, wherein when the said user is found, selecting the said user as the session target, i.e. as the second user and wherein the real-time session target matching to the first user is a user who sends a session request within a first duration range prior to the first timing.

7. The method according to claim 6, wherein after the establishing (S203) the session between the first user and the second user according to the identifier of the second user, the method further comprises:
receiving user information of the second user sent from the server, and
processing and outputting the user information of the second user, such that the output user information of the second user does not reveal personal information of the second user.

8. The method according to claim 6, wherein after the establishing (S203) the session between the first user and the second user according to the identifier of the second user, the method further comprises:
receiving user information of the first user, and
processing the user information of the first user, such that the processed user information of the first user does not reveal personal information of the first user.

9. The method according to claim 6, wherein after the establishing (S203) the session between the first user and the second user according to the identifier of the second user, the method further comprises:
receiving and forwarding a request sent from the first user for obtaining the use information of the second user to the server if the session between the first user and the second user reaches a first preset condition, wherein the first preset condition is optionally when a number of conversations reaches a preset number.

10. The method according to claim 6, wherein after the establishing (S203) the session between the first user and the second user according to the identifier of the second user, the method further comprises:
receiving and outputting opening remarks of the second user sent from the server;
wherein the opening remarks of the second user are words, photos, audio files or video files pre-stored in the server by the second user.

11. A computer program which when executing on a processor, performs the method according to any one of, claims 1 to 5, or claims 6 to 10.

12. A server for establishing a session, the server comprising:
a first receiving module (401) configured to receive a session request sent by a first user via a terminal, and record a timing at which the session request of the first user is received as a first timing;
a matching module (402) configured to perform matching to obtain a session target, i.e., a second user, to the first user;
by determining (S302-1) whether a session target matching to the first user is recorded in a locally stored register table; if a session target matching to the first user is recorded in the locally stored register table, using (S302-2) the session target matching to the first user recorded in the locally stored register table as the real-time session target matching to the first user; and if a session target matching to the first user is not recorded in the locally stored register table, searching for a user who sends a session request at a timing closest to and prior to the first timing, wherein when the said user is found, selecting the said user as the session target, i.e. as the second user; wherein the real-time session target matching to the first user is a user who sends a session request within a first duration range prior to the first timing; and
a first sending module (403) configured to send an identifier of the second user to the terminal so that the terminal establishes a session between the first user and the second user;
wherein the identifier is used for the terminal to distinguish the session target of the first user, and the identifier is invisible to the first user.

## Patentansprüche

1. Verfahren zur Einrichtung einer Sitzung, wobei das Verfahren bei einem Server Folgendes umfasst:
Empfangen ( 101, S301) einer Sitzungsanforderung, die von einem ersten Benutzer über ein Endgerät gesendet wird;
Erhalten eines Sitzungsziels, d. h. eines zweiten Benutzers, für den ersten Benutzer; und
Senden (S103, S305) einer Kennung des zweiten Benutzers zu dem Endgerät, so dass das Endgerät eine Sitzung zwischen dem ersten Benutzer und dem zweiten Benutzer einrichtet;
wobei die Kennung dafür verwendet wird, dass das Endgerät das Sitzungsziel des ersten Benutzers unterscheidet, und die Kennung für den ersten Benutzer unsichtbar ist, wobei das Empfangen (S301) der Sitzungsanforderung Folgendes umfasst:
Aufzeichnen eines Zeitpunkts, bei dem die Sitzungsanforderung des ersten Benutzers empfangen wird, als erster Zeitpunkt;
und wobei das Erhalten des Sitzungsziels Folgendes umfasst:
Durchführen einer Übereinstimmung (S302) zum Erhalten des Sitzungsziels durch
Bestimmen (S302-1), ob ein Sitzungsziel, das mit dem ersten Benutzer übereinstimmt, in einer lokal gespeicherten Registertabelle aufgezeichnet ist;
und wenn ein Sitzungsziel, das mit dem ersten Benutzer übereinstimmt, in der lokal gespeicherten Registertabelle aufgezeichnet ist,
Verwenden (S302-2) des Sitzungsziels, das mit dem ersten Benutzer übereinstimmt, der in der lokal gespeicherten Registertabelle aufgezeichnet ist, als Echtzeit-Sitzungsziel, das mit dem ersten Benutzer übereinstimmt; und
wenn ein Sitzungsziel, das mit dem ersten Benutzer übereinstimmt, nicht in der lokal gespeicherten Registertabelle aufgezeichnet ist,
Suchen nach einem Benutzer, der eine Sitzungsanforderung zu einem Zeitpunkt sendet, das am nächsten zu dem ersten Zeitpunkt und vor diesem liegt, wobei, wenn der Benutzer gefunden wird, der Benutzer als Sitzungsziel, d. h. als zweiter Benutzer, ausgewählt wird;
wobei das Echtzeit-Sitzungsziel, das mit dem ersten Benutzer übereinstimmt, ein Benutzer ist, der eine Sitzungsanforderung innerhalb eines ersten Zeitraums vor dem ersten Zeitpunkt sendet.

2. Verfahren nach Anspruch 1, wobei die Durchführung der Anpassung zum Erhalten des Sitzungsziels ferner Folgendes umfasst:
Schritt A:
Bestimmen (S302-1), ob das Sitzungsziel, das mit dem ersten Benutzer übereinstimmt, in der lokal gespeicherten Registertabelle aufgezeichnet ist,
wobei der Prozess zu Schritt B fortschreitet, wenn das Sitzungsziel, das mit dem ersten Benutzer übereinstimmt, in der lokal gespeicherten Registertabelle aufgezeichnet ist; und
wobei der Prozess zu Schritt C fortschreitet, wenn das Sitzungsziel, das mit dem ersten Benutzer übereinstimmt, nicht in der lokal gespeicherten Registertabelle aufgezeichnet ist;
Schritt B:
Verwenden (S302-2) des Sitzungsziels, das mit dem ersten Benutzer übereinstimmt, der in der lokal gespeicherten Registertabelle aufgezeichnet ist, als Echtzeit-Sitzungsziel, das mit dem ersten Benutzer übereinstimmt, und der Prozess endet;
Schritt C:
Auswählen (S302-3) des Sitzungsziels, das mit dem ersten Benutzer übereinstimmt, aus einer lokalen Kandidatenwarteschlange gemäß einer ersten voreingestellten Regel,
wobei der Prozess zu Schritt D übergeht, wenn die Auswahl erfolgreich ist; und
der Prozess zu Schritt E übergeht, wenn die Auswahl fehlgeschlagen hat; und
Schritt D:
Verwenden (S302-4) des Sitzungziels, das mit dem ersten Benutzer übereinstimmt und aus der lokalen Kandidatenwarteschlange gemäß einer ersten Regel ausgewählt wird, als Echtzeit-Sitzungsziel, das mit dem ersten Benutzer übereinstimmt, und
Aufzeichnen des ersten Benutzers und des Echtzeit-Sitzungsziels, das mit dem ersten Benutzer in der Registertabelle übereinstimmt, und der Prozess endet; und
Schritt E:
Hinzufügen (S302-5) des ersten Benutzers zur Kandidatenwarteschlange und der Prozess kehrt zu Schritt A zurück,
Bestimmen, dass das Echtzeit-Sitzungsziel, das dem ersten Benutzer entspricht, nicht existiert, wobei der Prozess endet, wenn das Echtzeit-Sitzungsziel, das mit dem ersten Benutzer übereinstimmt, nicht erfolgreich abgestimmt ist, wenn eine erste Zeitdauer erreicht wird.

3. Verfahren nach Anspruch 2, wobei die erste Regel eine oder eine beliebige Kombination der folgenden Regeln ist:
eine Regel, bei der ein Benutzer, der ein anderes Geschlecht hat, als der erste Benutzer, aus der Kandidatenwarteschlange mit einer ersten voreingestellten Wahrscheinlichkeit ausgewählt wird, um als Echtzeit-Sitzungsziel verwendet zu werden, das mit dem ersten Benutzer übereinstimmt, und
eine Regel, bei der ein Benutzer, der sich in der gleichen Stadt wie der erste Benutzer befindet, aus der Kandidatenwarteschlange mit einer zweiten voreingestellten Wahrscheinlichkeit ausgewählt wird, um als Echtzeit-Sitzungsziel verwendet zu werden, das mit dem ersten Benutzer übereinstimmt.

4. Verfahren nach Anspruch 3, wobei das Suchen (S304) nach dem Benutzer, der die Sitzungsanforderung zu dem Zeitpunkt sendet, der am nächsten zu und vor dem ersten Zeitpunkt liegt, als zweiter Benutzer auf folgende Weise ausgeführt wird:
Suchen nach dem Benutzer, der die Sitzungsanforderung vor dem ersten Zeitpunkt in einer Weiterleitungsreihenfolge gemäß dem Zeitpunkt sendet, zu dem die Sitzungsanforderung gesendet wird,
Verwenden eines Benutzers, der eine zweite gegenwärtige Regel erfüllt, als zweiter Benutzer, wenn der Benutzer, der die zweite voreingestellte Regel erfüllt, gefunden wird.

5. Verfahren nach Anspruch 4, wobei die zweite Regel eine oder eine beliebige Kombination der folgenden Regeln ist:
eine Regel, bei der ein Benutzer, der ein anderes Geschlecht hat, als der erste Benutzer, mit einer dritten voreingestellten Wahrscheinlichkeit ausgewählt wird, um als zweiter Benutzer verwendet zu werden; und
eine Regel, bei der ein Benutzer, der sich in der gleichen Stadt wie der erste Benutzer befindet, mit einer vierten voreingestellten Wahrscheinlichkeit ausgewählt wird, um als zweiter Benutzer verwendet zu werden.

6. Verfahren zur Einrichtung einer Sitzung, wobei das Verfahren an einem Benutzerendgerät Folgendes umfasst:
Senden (S201) einer Sitzungsanforderung eines ersten Benutzers an einen Server zu einem ersten Zeitpunkt;
Empfangen (S202) einer Kennung eines zweiten Benutzers, die von dem Server gesendet wird; und
Einrichten (S203) einer Sitzung zwischen dem ersten Benutzer und dem zweiten Benutzer gemäß der Kennung des zweiten Benutzers und Verbergen der Kennung des zweiten Benutzers;
wobei der zweite Benutzer ein Sitzungsziel ist, das durch den Server durch das Bestimmen (S302-1) erhalten wird, ob ein Sitzungsziel, das mit dem ersten Benutzer übereinstimmt, in einer lokal gespeicherten Registertabelle aufgezeichnet ist;
wenn ein Sitzungsziel, das mit dem ersten Benutzer übereinstimmt, in der lokal gespeicherten Registertabelle aufgezeichnet ist,
Verwenden (S302-2) des Sitzungsziels, das mit dem ersten Benutzer übereinstimmt, der in der lokal gespeicherten Registertabelle aufgezeichnet ist, als Echtzeit-Sitzungsziel, das mit dem ersten Benutzer übereinstimmt; und wenn ein Sitzungsziel, das mit dem ersten Benutzer übereinstimmt, nicht in der lokal gespeicherten Registertabelle aufgezeichnet ist,
Durchführen eines Echtzeit-Sitzungsziels, das mit dem ersten Benutzer übereinstimmt, gemäß der ersten Zeitdauer, und Suchen nach einem Benutzer, der eine Sitzungsanforderung zu einem Zeitpunkt sendet, das am nächsten zu dem ersten Zeitpunkt und vor diesem liegt, wobei, wenn der Benutzer gefunden wird, der Benutzer als Sitzungsziel, d. h. als zweiter Benutzer, ausgewählt wird, und wobei das Echtzeit-Sitzungsziel, das mit dem ersten Benutzer übereinstimmt, ein Benutzer ist, der eine Sitzungsanforderung innerhalb eines ersten Zeitraums vor dem ersten Zeitpunkt sendet.

7. Verfahren nach Anspruch 6, wobei nach dem Einrichten (S203) der Sitzung zwischen dem ersten Benutzer und dem zweiten Benutzer gemäß der Kennung des zweiten Benutzers das Verfahren ferner Folgendes umfasst:
Empfangen von Benutzerinformationen des zweiten Benutzers, die von dem Server gesendet werden, und
Verarbeiten und Ausgeben der Benutzerinformationen des zweiten Benutzers, so dass die ausgegebenen Benutzerinformationen des zweiten Benutzers keine personenbezogenen Daten des zweiten Benutzers offenbaren.

8. Verfahren nach Anspruch 6, wobei nach dem Einrichten (S203) der Sitzung zwischen dem ersten Benutzer und dem zweiten Benutzer gemäß der Kennung des zweiten Benutzers das Verfahren ferner Folgendes umfasst:
Empfangen von Benutzerinformationen des ersten Benutzers und
Verarbeiten der Benutzerinformationen des ersten Benutzers, so dass die verarbeiteten Benutzerinformationen des ersten Benutzers keine personenbezogenen Daten des ersten Benutzers offenbaren.

9. Verfahren nach Anspruch 6, wobei nach dem Einrichten (S203) der Sitzung zwischen dem ersten Benutzer und dem zweiten Benutzer gemäß der Kennung des zweiten Benutzers das Verfahren ferner Folgendes umfasst:
Empfangen und Weiterleiten einer Anforderung, die von dem ersten Benutzer gesendet wurde, um die Nutzungsinformationen des zweiten Benutzers an dem Server zu erhalten, wenn die Sitzung zwischen dem ersten Benutzer und dem zweiten Benutzer eine erste voreingestellte Bedingung erreicht, wobei die erste voreingestellte Bedingung optional ist, wenn eine Anzahl von Gesprächen eine voreingestellte Anzahl erreicht.

10. Verfahren nach Anspruch 6, wobei nach dem Einrichten (S203) der Sitzung zwischen dem ersten Benutzer und dem zweiten Benutzer gemäß der Kennung des zweiten Benutzers das Verfahren ferner Folgendes umfasst:
Empfangen und Ausgeben von Öffnungshinweisen des zweiten Benutzers, die von dem Server gesendet werden;
wobei die Öffnungshinweisen des zweiten Benutzers Worte, Fotos, Audiodateien oder Videodateien sind, die von dem zweiten Benutzer im Server vorab gespeichert sind.

11. Computerprogramm, das bei der Ausführung auf einem Prozessor das Verfahren nach einem der Ansprüche 1 bis 5 oder den Ansprüchen 6 bis 10 durchführt.

12. Server zum Aufbau einer Sitzung, wobei der Server Folgendes umfasst:
ein erstes Empfangsmodul (401), das für Folgendes konfiguriert ist: Empfangen einer Sitzungsanforderung, die von einem ersten Benutzer über ein Endgerät gesendet wird, und Aufzeichnen eines Zeitpunkts, bei dem die Sitzungsanforderung des ersten Benutzers empfangen wird, als erster Zeitpunkt;
ein Übereinstimmungsmodul (402), das so konfiguriert ist, dass es eine Übereinstimmung durchführt, um ein Sitzungsziel, d. h. einen zweiten Benutzer, für den ersten Benutzer zu erhalten;
durch Bestimmen (S302-1), ob ein Sitzungsziel, das mit dem ersten Benutzer übereinstimmt, in einer lokal gespeicherten Registertabelle aufgezeichnet ist;
wenn ein Sitzungsziel, das mit dem ersten Benutzer übereinstimmt, in der lokal gespeicherten Registertabelle aufgezeichnet ist,
Verwenden (S302-2) des Sitzungsziels, das mit dem ersten Benutzer übereinstimmt, der in der lokal gespeicherten Registertabelle aufgezeichnet ist, als Echtzeit-Sitzungsziel, das mit dem ersten Benutzer übereinstimmt, und wenn ein Sitzungsziel, das mit dem ersten Benutzer übereinstimmt, nicht in der lokal gespeicherten Registertabelle aufgezeichnet ist,
Suchen nach einem Benutzer, der eine Sitzungsanforderung zu einem Zeitpunkt sendet, das am nächsten zu dem ersten Zeitpunkt und vor diesem liegt, wobei, wenn der Benutzer gefunden wird, der Benutzer als Sitzungsziel, d. h. als zweiter Benutzer, ausgewählt wird; wobei das Echtzeit-Sitzungsziel, das mit dem ersten Benutzer übereinstimmt, ein Benutzer ist, der eine Sitzungsanforderung innerhalb eines ersten Zeitraums vor dem ersten Zeitpunkt sendet; und
ein erstes Sendemodul (403), das dafür konfiguriert ist, eine Kennung des zweiten Benutzers zu dem Endgerät zu senden, so dass das Endgerät eine Sitzung zwischen dem ersten Benutzer und dem zweiten Benutzer einrichtet;
wobei die Kennung dafür verwendet wird, dass das Endgerät das Sitzungsziel des ersten Benutzers unterscheidet, und die Kennung für den ersten Benutzer unsichtbar ist.

## Revendications

1. Un procédé d'établissement d'une session, où le procédé comprend, au niveau d'un serveur :
la réception (S101, S301) d'une demande de session envoyée à partir d'un premier utilisateur par l'intermédiaire d'un terminal,
l'obtention d'une cible de session, c'est-à-dire un deuxième utilisateur, vers le premier utilisateur, et
l'envoi (S103, S305) d'un identifiant du deuxième utilisateur au terminal de sorte que le terminal établisse une session entre le premier utilisateur et le deuxième utilisateur,
où l'identifiant est utilisé par le terminal de façon à distinguer une cible de session du premier utilisateur, et l'identifiant est invisible au premier utilisateur,
où la réception (S301) de la demande de session comprend :
l'enregistrement d'un instant auquel la demande de session du premier utilisateur est reçue en tant que premier instant,
et où l'obtention de la cible de session comprend :
l'exécution d'une mise en correspondance (S302) de façon à obtenir la cible de session par :
la détermination (S302-1) si une cible de session mise en correspondance avec le premier utilisateur est enregistrée dans une table de registre conservée en mémoire localement,
et si une cible de session mise en correspondance avec le premier utilisateur est enregistrée dans la table de registre conservée en mémoire localement,
l'utilisation (S302-2) de la cible de session mise en correspondance avec le premier utilisateur enregistrée dans la table de registre conservée en mémoire localement en tant que cible de session en temps réel mise en correspondance avec le premier utilisateur, et
si une cible de session mise en correspondance avec le premier utilisateur n'est pas enregistrée dans la table de registre conservée en mémoire localement,
la recherche d'un utilisateur qui envoie une demande de session à un instant le plus proche de et antérieur au premier instant, où, lorsque ledit utilisateur est trouvé, la sélection dudit utilisateur en tant que cible de session, c'est-à-dire en tant que deuxième utilisateur,
où la cible de session en temps réel mise en correspondance avec le premier utilisateur est un utilisateur qui envoie une demande de session à l'intérieur d'une première plage de durée antérieure au premier instant.

2. Le procédé selon la Revendication 1, où l'exécution de la mise en correspondance de façon à obtenir la cible de session comprend en outre :
opération A :
la détermination (S302-1) si la cible de session mise en correspondance avec le premier utilisateur est enregistrée dans la table de registre conservée en mémoire localement,
le procédé passant à l'opération B si la cible de session mise en correspondance avec le premier utilisateur est enregistrée dans la table de registre conservée en mémoire localement, et
le procédé passant à l'opération C si la cible de session mise en correspondance avec le premier utilisateur n'est pas enregistrée dans la table de registre conservée en mémoire localement,
opération B :
l'utilisation (S302-2) de la cible de session mise en correspondance avec le premier utilisateur enregistrée dans la table de registre conservée en mémoire localement en tant que cible de session en temps réel mise en correspondance avec le premier utilisateur, et le procédé se terminant,
opération C :
la sélection (S302-3) de la cible de session mise en correspondance avec le premier utilisateur à partir d'une file d'attente candidate locale en fonction d'une première règle prédéfinie,
le procédé passant à l'opération D si la sélection est un succès, et
le procédé passant à l'opération E si la sélection est un échec,
opération D :
l'utilisation (S302-4) de la cible de session, qui est mise en correspondance avec le premier utilisateur et sélectionnée à partir de la file d'attente candidate locale en fonction d'une première règle, en tant que cible de session en temps réel mise en correspondance avec le premier utilisateur, et
l'enregistrement du premier utilisateur et de la cible de session en temps réel mise en correspondance avec le premier utilisateur dans la table de registre, et le procédé se terminant, et
opération E :
l'ajout (S302-5) du premier utilisateur à la file d'attente candidate, et le procédé revenant à l'opération A,
la détermination que la cible de session en temps réel mise en correspondance avec le premier utilisateur n'existe pas, et le procédé se terminant si la cible de session en temps réel mise en correspondance avec le premier utilisateur n'est pas mise en correspondance avec succès lorsqu'une première durée est atteinte.

3. Le procédé selon la Revendication 2, où la première règle est toute règle ou toute combinaison des règles suivantes :
une règle dans laquelle un utilisateur, qui possède un genre différent de celui du premier utilisateur, est sélectionné à partir de la file d'attente candidate avec une première probabilité prédéfinie à utiliser en tant que cible de session en temps réel mise en correspondance avec le premier utilisateur, et
une règle dans laquelle un utilisateur, qui se trouve dans la même ville que le premier utilisateur, est sélectionné à partir de la file d'attente candidate avec une deuxième probabilité prédéfinie à utiliser en tant que cible de session en temps réel mise en correspondance avec le premier utilisateur.

4. Le procédé selon la Revendication 3, où la recherche (S304) de l'utilisateur qui envoie la demande de session à l'instant le plus proche de et antérieur au premier instant en tant que deuxième utilisateur est exécutée de la manière suivante :
la recherche de l'utilisateur qui envoie la demande de session avant le premier instant dans un ordre de transmission en fonction de l'instant auquel la demande de session est envoyée,
l'utilisation d'un utilisateur qui satisfait une deuxième règle existante en tant que deuxième utilisateur si l'utilisateur qui satisfait la deuxième règle prédéfinie est trouvé.

5. Le procédé selon la Revendication 4, où la deuxième règle est toute règle ou toute combinaison des règles suivantes :
une règle dans laquelle un utilisateur, qui possède un genre différent de celui du premier utilisateur, est sélectionné avec une troisième probabilité prédéfinie à utiliser en tant que deuxième utilisateur, et
une règle dans laquelle un utilisateur, qui se trouve dans la même ville que le premier utilisateur, est sélectionné avec une quatrième probabilité prédéfinie à utiliser en tant que deuxième utilisateur.

6. Un procédé d'établissement d'une session, le procédé comprenant, au niveau d'un terminal d'utilisateur :
l'envoi (S201) d'une demande de session d'un premier utilisateur à un serveur à un premier instant,
la réception (S202) d'un identifiant d'un deuxième utilisateur envoyé à partir du serveur, et
l'établissement (S203) d'une session entre le premier utilisateur et le deuxième utilisateur en fonction de l'identifiant du deuxième utilisateur et le masquage de l'identifiant du deuxième utilisateur,
où le deuxième utilisateur est une cible de session obtenue par le serveur par l'intermédiaire de la détermination (S302-1) si une cible de session mise en correspondance avec le premier utilisateur est enregistrée dans une table de registre conservée en mémoire localement,
si une cible de session mise en correspondance avec le premier utilisateur est enregistrée dans la table de registre conservée en mémoire localement,
l'utilisation (S302-2) de la cible de session mise en correspondance avec le premier utilisateur enregistrée dans la table de registre conservée en mémoire localement en tant que cible de session en temps réel mise en correspondance avec le premier utilisateur, et
si une cible de session mise en correspondance avec le premier utilisateur n'est pas enregistrée dans la table de registre conservée en mémoire localement,
l'exécution d'une cible de session en temps réel mise en correspondance avec le premier utilisateur en fonction du premier instant, et par la recherche d'un utilisateur qui envoie une demande de session à un instant le plus proche de et antérieur au premier instant, où, lorsque ledit utilisateur est trouvé, la sélection dudit utilisateur en tant que cible de session, c'est-à-dire en tant que deuxième utilisateur, et où la cible de session en temps réel mise en correspondance avec le premier utilisateur est un utilisateur qui envoie une demande de session à l'intérieur d'une première plage de durée antérieure au premier instant.

7. Le procédé selon la Revendication 6, où, après l'établissement (S203) de la session entre le premier utilisateur et le deuxième utilisateur en fonction de l'identifiant du deuxième utilisateur, le procédé comprend en outre :
la réception d'informations d'utilisateur du deuxième utilisateur envoyées à partir du serveur, et
le traitement et la production en sortie des informations d'utilisateur du deuxième utilisateur, de sorte que les informations d'utilisateur produites en sortie du deuxième utilisateur ne révèlent pas des informations personnelles du deuxième utilisateur.

8. Le procédé selon la Revendication 6, où, après l'établissement (S203) de la session entre le premier utilisateur et le deuxième utilisateur en fonction de l'identifiant du deuxième utilisateur, le procédé comprend en outre :
la réception d'informations d'utilisateur du premier utilisateur, et
le traitement des informations d'utilisateur du premier utilisateur, de sorte que les informations d'utilisateur traitées du premier utilisateur ne révèlent pas des informations personnelles du premier utilisateur.

9. Le procédé selon la Revendication 6, où, après l'établissement (S203) de la session entre le premier utilisateur et le deuxième utilisateur en fonction de l'identifiant du deuxième utilisateur, le procédé comprend en outre :
la réception et la transmission d'une demande envoyée à partir du premier utilisateur destinée à l'obtention des informations d'utilisation du deuxième utilisateur au serveur si la session entre le premier utilisateur et le deuxième utilisateur remplit une première condition prédéfinie, où la première condition prédéfinie est éventuellement l'instant où un nombre de conversations atteint un nombre prédéfini.

10. Le procédé selon la Revendication 6, où, après l'établissement (S203) de la session entre le premier utilisateur et le deuxième utilisateur en fonction de l'identifiant du deuxième utilisateur, le procédé comprend en outre :
la réception et la production en sortie de remarques d'introduction du deuxième utilisateur envoyées à partir du serveur,
où les remarques d'introduction du deuxième utilisateur sont des mots, des photos, des fichiers audio ou des fichiers vidéo pré-conservés en mémoire dans le serveur par le deuxième utilisateur.

11. Un programme informatique qui, lorsqu'il est exécuté sur un processeur, exécute le procédé selon l'une quelconque des Revendications 1 à 5 ou des Revendications 6 à 10.

12. Un serveur destiné à l'établissement d'une session, le serveur comprenant :
un premier module de réception (401) configuré de façon à recevoir une demande de session envoyée par un premier utilisateur par l'intermédiaire d'un terminal et à enregistrer un instant auquel la demande de session du premier utilisateur est reçue en tant que premier instant,
un module de mise en correspondance (402) configuré de façon à exécuter une mise en correspondance visant à obtenir une cible de session, c'est-à-dire un deuxième utilisateur, vers le premier utilisateur,
par la détermination (S302-1) si une cible de session mise en correspondance avec le premier utilisateur est enregistrée dans une table de registre conservée en mémoire localement,
si une cible de session mise en correspondance avec le premier utilisateur est enregistrée dans la table de registre conservée en mémoire localement,
l'utilisation (S302-2) de la cible de session mise en correspondance avec le premier utilisateur enregistrée dans la table de registre conservée en mémoire localement en tant que cible de session en temps réel mise en correspondance avec le premier utilisateur, et si une cible de session mise en correspondance avec le premier utilisateur n'est pas enregistrée dans la table de registre conservée en mémoire localement,
la recherche d'un utilisateur qui envoie une demande de session à un instant le plus proche de et antérieur au premier instant, où, lorsque ledit utilisateur est trouvé, la sélection dudit utilisateur en tant que cible de session, c'est-à-dire en tant que deuxième utilisateur, où la cible de session en temps réel mise en correspondance avec le premier utilisateur est un utilisateur qui envoie une demande de session à l'intérieur d'une première plage de durée antérieure au premier instant, et
un premier module d'envoi (403) configuré de façon à envoyer un identifiant du deuxième utilisateur au terminal de sorte que le terminal établisse une session entre le premier utilisateur et le deuxième utilisateur,
où l'identifiant est utilisé par le terminal de façon à distinguer la cible de session du premier utilisateur, et l'identifiant est invisible au premier utilisateur.
